# EUROPEAN PATENT APPLICATION

(11) **EP 4 574 758 A1**
(43) Date of publication of application: **25.06.2025**
(21) Application number: 24214376.6
(22) Date of filing: 21.11.2024
(51) Int. Cl.: C01B 32/159, C01B 32/174, H01M 4/02

(54) **CARBON NANOTUBE DISPERSION, METHOD OF PREPARING THE SAME, AND ELECTRODE SLURRY COMPOSITION AND SECONDARY BATTERY INCLUDING CARBON NANOTUBE DISPERSION**

(30) Priority: 19.12.2023 KR 20230185819; 13.09.2024 KR 20240125425
(71) Applicant: SK Inc., Seoul 03188 (KR)
(72) Inventor: BAEK, Kangkyun, Sejong-si 30068 (KR); YOO, ByeongIl, Sejong-si 30068 (KR); LEE, Wonyeol, Sejong-si 30068 (KR); KIM, Youngsu, Sejong-si 30068 (KR)
(74) Representative: Isarpatent

(57) **Abstract**

The present invention provides a carbon nanotube dispersion, a method of preparing the same, an electrode slurry composition and secondary battery including the carbon nanotube dispersion, wherein the carbon nanotube dispersion includes carbon nanotubes, the first dispersant surrounding the surface of the carbon nanotubes, the second dispersant for introducing charges to the surface of the carbon nanotubes, and a storage stabilizer having electrostatic repulsion against the charges.

## Description

### [Technical Field]

The present invention relates to a carbon nanotube dispersion, a method of preparing the same, an electrode slurry composition and secondary battery including the carbon nanotube dispersion.

### [Background Art]

Due to the rapid increase in fossil fuel use, the demand for alternative or clean energy is increasing. Currently, a representative example of an electrochemical device that uses electrochemical energy is a secondary battery, and its application area is gradually expanding. A secondary battery is a battery that can be used repeatedly through the process of discharging, in which chemical energy is converted into electrical energy, and charging, in the opposite direction. A secondary battery may include a cathode, an anode, an electrolyte, and a separator. The positive and anodes may generally include an electrode current collector and an electrode active material layer formed on the electrode current collector. An electrode active material layer may be manufactured by applying and drying an electrode slurry composition including an electrode active material, a conductive agent, a binder, etc. on an electrode current collector, and then rolling it.

A conductive agent is intended to improve the conductivity of an electrode active material, and a dot-shaped conductive agent such as carbon black has been mainly used. However, a dot-shaped conductive agent does not have a high effect on improving electrical conductivity, so it should be used in excess to obtain sufficient effects, which reduces the content of an electrode active material and, accordingly, lowers battery capacity.

To solve such problems, attempts are actively being made to apply highly conductive carbon nanotubes (CNT) as a conductive agent.

However, due to the nature of carbon nanotubes, their dispersibility within a slurry is poor, which deteriorates the manufacturing processability of a secondary battery, and, as the cycle of the secondary battery progresses, the conductivity decreases, which causes the performance of the secondary battery to deteriorate.

### [Disclosure]

### [Technical Problem]

Therefore, the present invention has been made in view of the above problems, and it is one object of the present invention to provide a carbon nanotube dispersion having excellent dispersibility and excellent long-term storage stability and capable of improving the performance of a secondary battery, a method of preparing the carbon nanotube dispersion, and an electrode slurry composition and secondary battery including the carbon nanotube dispersion.

### [Technical Solution]

In accordance with an aspect of the present invention, the above and other objects can be accomplished by the provision of a carbon nanotube dispersion, including: carbon nanotubes; a first dispersant surrounding a surface of the carbon nanotubes; a second dispersant for introducing charges to the surface of the carbon nanotubes; and a storage stabilizer having electrostatic repulsion against the charges.

In an embodiment of the present invention, the storage stabilizer may include a phenolic compound having two or more aromatic rings.

In an embodiment of the present invention, the phenolic compound may have a weight average molecular weight of 200 g/mol to 3,000 g/mol.

In an embodiment of the present invention, a content of the storage stabilizer based on a total weight of the carbon nanotube dispersion may be 0.01 wt% to 0.1 wt%.

In an embodiment of the present invention, a content of the storage stabilizer based on 100 parts by weight of the carbon nanotubes may be 1 part by weight to 10 parts by weight.

In an embodiment of the present invention, the carbon nanotubes may be single-walled carbon nanotubes.

In an embodiment of the present invention, the first dispersant may include a nonionic polymer.

In an embodiment of the present invention, the second dispersant may include an ionic polymer.

In an embodiment of the present invention, an initial viscosity of the carbon nanotube dispersion at room temperature may be 1,000 cP to 10,000 cP.

In accordance with another aspect of the present invention, there is provided a method of preparing a carbon nanotube dispersion, the method including: mixing carbon nanotubes, a first dispersant including a nonionic polymer, a second dispersant including an ionic polymer, a storage stabilizer including a phenolic compound having two or more aromatic rings, and an aqueous solvent to prepare a mixture; milling and disintegrating the mixture; and dispersing the mixture.

In an embodiment of the present invention, the mixture may be disintegrated so that an average particle diameter of the mixture is less than 100 *µ*m.

In accordance with still another aspect of the present invention, there is provided an electrode slurry composition, including: an electrode active material; a binder; and a carbon nanotube dispersion, wherein the carbon nanotube dispersion includes carbon nanotubes, a first dispersant surrounding a surface of the carbon nanotubes, a second dispersant for introducing charges to the surface of the carbon nanotubes, and a storage stabilizer having electrostatic repulsion against the charges.

In accordance with yet another aspect of the present invention, there is provided a secondary battery, including: an electrode; a separator; and an electrolyte, wherein the electrode includes an electrode active material, a binder, and a conductive agent, wherein the conductive agent is manufactured from a carbon nanotube dispersion, wherein the carbon nanotube dispersion includes carbon nanotubes, a first dispersant surrounding a surface of the carbon nanotubes, a second dispersant for introducing charges to the surface of the carbon nanotubes, and a storage stabilizer having electrostatic repulsion against the charges.

### [Advantageous effects]

Carbon nanotubes in a carbon nanotube dispersion according to the present invention are stabilized by the first dispersant and the second dispersant, and charges are introduced to the surface of the carbon nanotubes, so that the dispersibility of the carbon nanotubes can be improved.

In addition, the carbon nanotube dispersion according to the present invention includes a storage stabilizer having electrostatic repulsion against charges introduced to the surface of the carbon nanotubes. Repulsive force between the carbon nanotubes surface-modified with charges can be induced by the storage stabilizer, so that the long-term storage stability of the carbon nanotube dispersion can be improved.

In addition, since the carbon nanotube dispersion according to the present invention includes the first dispersant, the second dispersant, and a storage stabilizer and, accordingly, has an appropriate initial viscosity range, so that an increase in viscosity over time can be minimized.

Further, the carbon nanotube dispersion has excellent dispersibility and long-term storage stability and, accordingly, can include single-walled carbon nanotubes having electrical conductivity in a high content, so that the initial discharge capacity and high-rate feature of a secondary battery manufactured using the carbon nanotube dispersion can be improved.

### [Best Mode]

Structural or functional descriptions of embodiments disclosed in the present specification or application are merely illustrated for the purpose of explaining embodiments according to the technical idea of the present invention, embodiments according to the technical idea of the present invention may be implemented in various forms other than the embodiments disclosed in the present specification or application, and it is not to be construed that the technical idea of the present invention is limited to the embodiments described in the present specification or application.

In the present specification or application, when a certain component is "included", this indicates that only the component is included or the component may further include another component unless there is no different disclosure. In addition, it should be understood that all numerical ranges representing physical property values, dimensions, etc. of components described in the present specification or application are modified by the term 'about' in all cases unless otherwise specified. In addition, in the present specification or the present application, 'ppm' is based on the weight. In addition, in the present specification or the present application, "A and/or B" means "A, B, or, A and B."

Hereinafter, a carbon nanotube dispersion according to the present invention, a method of preparing the same, an electrode slurry composition and secondary battery including the carbon nanotube dispersion are described.

In general, a conductive material is used to improve the electrical conductivity of an electrode active material used in a secondary battery, and the conductive material may be mixed with the electrode active material in a dispersion state in which a dispersant and a solvent are mixed.

To further improve the electrical conductivity of the electrode active material, carbon nanotubes have been noted as a conductive material. However, unlike dot-shaped conductive materials such as carbon black, carbon nanotubes, which are linear conductive materials, have a high specific surface area, and have a problem that aggregation occurs due to van der Waals attraction between the carbon nanotubes.

In particular, single-walled carbon nanotubes among carbon nanotubes have excellent electrical conductivity, but they have a problem in that aggregation easily occurs due to high specific surface area and strong attractive force, and dispersibility is very low.

The present inventors combined a first dispersant, which can stabilize carbon nanotubes, and a second dispersant, which can introduce charges to the surface of the carbon nanotubes, and noted that, if the carbon nanotubes to which charges are introduced have a repulsive force to prevent them from agglomerating with each other, dispersibility and long-term storage stability can be improved.

Accordingly, it was conceived that, when a dispersion contains a substance having electrostatic repulsion between carbon nanotubes into which charge is introduced, dispersibility and long-term storage stability can be improved, and as a result, a high content of carbon nanotubes can be included in the dispersion and, accordingly, the performance of a secondary battery including the carbon nanotubes as a conductive agent can be improved.

A carbon nanotube dispersion according to the present invention includes carbon nanotubes.

The carbon nanotubes may have a cylinder shape where graphite sheets have a nano-sized diameter, and may be a secondary structure where multiple carbon nanotubes are arranged or aggregated. When the carbon nanotubes are used as a conductive agent, the electrical conductivity of an electrode may be improved.

The content of the carbon nanotubes may be 0.01 wt% to 15.00 wt%, 0.01 wt% to 10.00 wt%, 0.01 wt% to 8.00 wt%, 0.05 wt% to 8.00 wt%, 0.1 wt% to 8.00 wt%, or 0.1 wt% to 5.00 wt% based on the total weight of the carbon nanotube dispersion. When the range is satisfied, an increase in the viscosity of the carbon nanotube dispersion may be suppressed, and when used as a conductive agent for a secondary battery, it may have an appropriate adhesive force with a binder during electrode manufacturing and may have an appropriate loading amount, so that the process efficiency may be improved.

The carbon nanotubes may be multi-walled carbon nanotubes (MWCNT) having a large number of bonds forming walls, thin-walled carbon nanotubes (TWCNT), or single-walled carbon nanotubes (SWCNT).

Preferably, the carbon nanotubes may be single-walled carbon nanotubes. The single-walled carbon nanotubes have excellent electrical conductivity, compared to the multi-walled carbon nanotubes, so that the initial efficiency, lifespan characteristics, and high-rate discharge characteristics of a secondary battery may be improved.

The single-walled carbon nanotubes have high cohesion, so that a dispersion containing the single-walled carbon nanotubes exhibits poor long-term storage stability, and it is difficult to commercialize the single-walled carbon nanotubes as a conductive agent. However, the present inventors confirmed that, when the first dispersant where the single-walled carbon nanotubes can be stabilized, the second dispersant that can introduce charges to the surface of the single-walled carbon nanotubes, and a storage stabilizer that has electrostatic repulsion with charges formed on the surface of the single-walled carbon nanotubes were used together with the single-walled carbon nanotubes, excellent dispersibility and long-term storage stability were exhibited even if the single-walled carbon nanotubes having high cohesion were used, so that it was possible to commercialize it as a conductive agent.

The single-walled carbon nanotubes may have a BET-specific surface area of 800 m²/g to 1,800 m²/g, 1,00 m²/g to 1,800 m²/g, 1,200 m²/g to 1,800 m²/g, 1,200 m²/g to 1,700 m²/g, 1,300 m²/g to 1,700 m²/g, 1,400 m²/g to 1,700 m²/g, or 1,500 m²/g to 1,700 m²/g. The BET-specific surface area may be measured from the nitrogen gas adsorption at liquid nitrogen temperature (77K) using BELSORP-mini II of BEL Japan Company.

The single-walled carbon nanotubes may have a powder resistance of 0.001 ohm·cm or less, 0.0009 ohm·cm or less, 0.0008 ohm·cm or less, or 0.0007 ohm·cm or less at a rolling density of 1 g/cc or more. When the powder resistance value is low, the electrical conductivity of the single-walled carbon nanotubes may be improved. Accordingly, when the range is satisfied, the performance of a secondary battery using the single-walled carbon nanotubes as a conductive agent may be improved.

The powder resistance may be measured as a powder resistance value when a rolling density is 1 g/cc using a powder resistance meter (MCP-PD51) equipped with a 4-pin probe.

The length of the single-walled carbon nanotubes may be 10 nm to 20,000 nm, 100 nm to 20,000 nm, 300 nm to 20,000 nm, 500 nm to 20,000 nm, or 800 nm to 15,000 nm.

The average diameter (D₅₀) of the single-walled carbon nanotubes may be 0.5 nm to 25 nm, 0.5 nm to 20 nm, 0.5 nm to 15 nm, 0.5 nm to 10 nm, 0.8 nm to 10 nm, 1 nm to 10 nm, or 1 nm to 5 nm.

The length and the diameter may be measured using an atomic force microscope (AFM). The length may correspond to the average value of the top 100 single-walled carbon nanotubes with a large average length and the bottom 100 single-walled carbon nanotubes, and the diameter may correspond to the average value of the top 100 single-walled carbon nanotubes with a large average diameter and the bottom 100 single-walled carbon nanotubes.

In the single-walled carbon nanotubes, a weight change dependent upon a temperature change may be measured with a thermogravimetric analyzer. The temperature change may be measured while increasing the temperature at an interval of 10 °C/min in a temperature range of 40 °C to 1,000 °C under a nitrogen atmosphere.

A temperature at which the thermal decomposition of the single-walled carbon nanotubes begins may be measured with the thermogravimetric analyzer. The purity of the single-walled carbon nanotubes may be evaluated by measuring a weight change in the single-walled carbon nanotubes dependent upon a temperature change.

A weight change in the single-walled carbon nanotubes measured with the thermogravimetric analyzer at 40 °C to 300 °C may be 2 % or less, 1.9 % or less, 1.8 % or less, 1.7 % or less, or 1.5 % or less.

A weight change in the single-walled carbon nanotubes measured with the thermogravimetric analyzer at 300 °C to 550 °C may be 2 % or less, 1.5 % or less, 1.3 % or less, 1.2 % or less, or 1 % or less.

A weight change in the single-walled carbon nanotubes measured with the thermogravimetric analyzer at 40 °C to 550 °C may be 2 % or less, 1.98 % or less, 1.97 % or less, 1.96 % or less, or 1.95 % or less.

The thermal decomposition start temperature of the single-walled carbon nanotubes measured with the thermogravimetric analyzer may be 500 °C to 700 °C, 520 °C to 700 °C, 530 °C to 650 °C, or 550 °C to 600 °C. The thermal decomposition start temperature may be derived from a peak point obtained by differentiating a temperature-weight graph measured by a thermogravimetric analyzer.

The content of a residue in the single-walled carbon nanotubes after the completion of the thermal decomposition, measured with the thermogravimetric analyzer, may be 1% or less, 0.5 % or less, 0.1 % or less, 0.05 % or less, 0.03 % or less, 0.02 % or less, or 0.01 % or less.

When the weight change, the thermal decomposition start temperature, and the residue of the single-walled carbon nanotubes are in the above ranges, impurities are minimized and purity is improved. When it is used as a conductive agent, electrical conductivity may be improved so that the performance of a secondary battery may be improved. In addition, dispersibility may be improved, so that coatability and processability may be improved.

The single-walled carbon nanotubes may be a bundle type or rope-shaped bundle type in which multiple single-walled carbon nanotubes are arranged in a certain direction, or a sphere- or potato-shaped entangled type in which multiple single-walled carbon nanotubes are entangled without a certain direction.

The single-walled carbon nanotubes may be manufactured through a step of synthesizing single-walled carbon nanotubes, and a step of purifying the synthesized single-walled carbon nanotubes.

The single-walled carbon nanotubes may be synthesized by a laser ablation method. The laser ablation method may refer to a process of irradiating a laser beam to a mixture of a raw material, which contains carbon, and a catalyst under an inert gas atmosphere, and single-walled carbon nanotubes may be synthesized by the process. The inert gas may be argon or nitrogen. The raw material including carbon may be graphite. The catalyst may be a metal catalyst. The intensity of the laser beam may be 100 mJ/cm² to 300 mJ/cm², 110 mJ/cm² to 300 mJ/cm², 110 mJ/cm² to 290 mJ/cm², or 120 mJ/cm² to 280 mJ/cm².

The single-walled carbon nanotubes may be synthesized by an arc discharge method. The arc discharge method may refer to a process of causing an arc discharge between a pair of electrodes to deposit evaporated matter generated from an anode, and single-walled carbon nanotubes may be synthesized by the above process. The anode may include a raw material containing carbon. The raw material containing carbon may be graphite. The anode may include a transition metal. The transition metal may include at least one of an iron element, a cobalt element, a yttrium element, and a nickel element. The graphite may have a rod shape having pores. The graphite pores may be mixed with the transition metal. The arc discharge method may be performed under an inert gas atmosphere, or an inert gas and hydrogen gas atmosphere. The arc discharge method may be performed under an atmosphere of a small amount of hydrocarbon gas. The hydrocarbon gas may include at least one of methane, ethylene, and acetylene. The pair of electrodes may be spaced apart from each other by a certain distance. The pair of electrodes may be spaced apart from each other by 5 mm or less, 4 mm or less, 3 mm or less, 2 mm or less, or 1 mm or less. The arc discharge method may be a DC arc discharge method. A DC power source in the direct-current arc discharge method may have a voltage range of 20 V to 70 V, 22 V to 70 V, 22 V to 65 V, or 25 V to 65 V. A DC power source in the direct-current arc discharge method may have a current range of 40 A to 120 A, 40 V to 115 V, 40 V to 100 V, or 45 V to 100 V.

Preferably, the single-walled carbon nanotubes may be synthesized by a chemical vapor deposition method. The chemical vapor deposition method may refer to a process of thermally decomposing a hydrocarbon, such as methane, ethylene or acetylene, benzene, toluene, or xylene in a gas phase in the presence of a catalyst, and single-walled carbon nanotubes may be synthesized by the process. As the catalyst, nanoparticles loaded with iron elements, cobalt elements, nickel elements, molybdenum elements, etc., or alumina or silica loaded with the nanoparticles may be used. The chemical vapor deposition has the advantage of being able to easily control the diameter, length, density, structure, crystallinity, etc. of single-walled carbon nanotubes, and to mass-produce high-purity single-walled carbon nanotubes.

The synthesized single-walled carbon nanotubes may include impurities. The impurities may include at least one of a metal oxide, a metal, and a non-metal. The metal oxide may include a ceramic metal. The ceramic metal may be derived from a catalyst support in the synthesis process of the single-walled carbon nanotubes. The metal may include at least one of an iron element, a cobalt element, a nickel element, a chromium element, a copper element, a manganese element, a nickel element, and a zinc element. The non-metal may include a sulfur element. The metal and non-metal may be derived from a catalyst in the synthesis process of the single-walled carbon nanotubes.

The single-walled carbon nanotubes may be cut by a nickel element among the impurities, its length may be shortened or its surface may be oxidized, thereby deteriorating the electrical and mechanical properties. The nickel element may damage the unique characteristics of the single-walled carbon nanotubes. Accordingly, it is more preferred to perform a process of purifying the synthesized single-walled carbon nanotubes to remove the nickel element. The BET-specific surface area and nickel element content in the single-walled carbon nanotubes may be controlled according to not only the synthesis process of the single-walled carbon nanotubes but also the process conditions for removing the impurities.

The synthesized single-walled carbon nanotubes may be purified by a physical or chemical method.

Examples of the physical method include centrifugation, carbon nanotube solubilization, high-temperature annealing, and the like.

The centrifugation is a method of applying centrifugal force to a mixture of substances having different masses to separate the substances based on a difference in sedimentation speeds. By the centrifugation, amorphous carbon, carbon nanoparticles, and single-walled carbon nanotubes included in the synthesized single-walled carbon nanotubes may be separated.

The carbon nanotube solubilization may be performed by introducing a functional group to the surface of the single-walled carbon nanotubes, dissolving the single-walled carbon nanotubes in a solvent, and then separating high-purity carbon nanotubes from the impurities using filtration or chromatography.

The high-temperature annealing is a process in which carbon does not undergo phase change even at a high temperature of about 1,500 °C or higher under inert gas or vacuum conditions, so that the impurities formed on the carbon nanotubes may be removed by treating the single-walled carbon nanotubes at a high temperature higher than the vaporization temperature of the impurities under inert gas or vacuum conditions.

Examples of the chemical method include electrochemical oxidation, gas phase oxidation, liquid phase oxidation, etc.

The electrochemical oxidation may remove the amorphous carbon and impurities contained in the single-walled carbon nanotubes by electrically oxidizing the synthesized single-walled carbon nanotubes in a potassium hydroxide solution or a sulfuric acid solution.

The liquid phase oxidation may remove the amorphous carbon and impurities contained in the single-walled carbon nanotubes by reacting the synthesized single-walled carbon nanotubes with an oxidizing liquid. As the oxidizing liquid, hydrochloric acid, nitric acid, sulfuric acid, phosphoric acid, or the like may be used. The liquid phase oxidation may remove metal oxides and metals among the impurities contained in the single-walled carbon nanotubes The liquid phase oxidation may be performed at about 20 °C to 25 °C. Previously, the liquid phase oxidation was performed in a high-temperature range of about 50 °C to 70 °C, but during a purification process, the structure of the single-walled carbon nanotubes could be destroyed (e.g., cutting and terminal opening, could be destroyed), and there was a problem that the oxidizing liquid reactant existed as a secondary impurity on the single-walled carbon nanotubes. Accordingly, when the liquid phase oxidation satisfies the temperature range, the problem of secondary impurities occurring on the purified single-walled carbon nanotubes may be suppressed, and the structural stability of the purified single-walled carbon nanotubes may be improved.

The gas phase oxidation may remove the amorphous carbon and impurities contained in the single-walled carbon nanotubes by heat-treating the synthesized single-walled carbon nanotubes in an oxidizing gas atmosphere at a temperature range of about 700 °C to 1,000 °C. As the oxidizing gas, air, chlorine, a mixture of water vapor and hydrogen chloride, hydrogen sulfide, argon, etc. may be used.

The purifying step may be performed for 30 minutes to 200 minutes, 30 minutes to 150 minutes, 40 minutes to 120 minutes, 40 minutes to 110 minutes, or 40 minutes to 100 minutes.

The purifying step may be performed at 900 °C or higher, 920 °C or higher, 950 °C or higher, or 1,000 °C or higher.

After the purifying step, a step of cooling to room temperature in a vacuum state may be performed.

By the purifying step, metal, which are impurities contained in the single-walled carbon nanotubes, may be efficiently removed.

The carbon nanotube dispersion according to the present invention includes a first dispersant that surrounds the surface of the carbon nanotubes.

The first dispersant may include a nonionic polymer.

The first dispersant may include one or more selected from the group consisting of polyethylene glycol, polypropylene glycol, polybutylene glycol, polyvinyl alcohol, polyvinyl pyrrolidone, polyacrylic acid hydrazide, poly-N-vinyl-5-methoxazolidone, N-alkyl polyimine, N-acetyl polyimine, polyacrylamide, poly-L-lysine, polyethylene imine, and polyethylene glycol-polypropylene glycol copolymer as a nonionic polymer.

Preferably, the first dispersant may include polyvinyl pyrrolidone having a weight average molecular weight of 4,000 g/mol to 80,000 g/mol, 5,000 g/mol to 80,000 g/mol, 5,000 g/mol to 60,000 g/mol, 10,000 g/mol to 50,000 g/mol, or 17,000 g/mol to 50,000 g/mol as a nonionic polymer.

When the range is satisfied, the phenomenon of the first dispersant being eluted during electrode manufacturing may be suppressed, the kneading with other materials in a carbon nanotube dispersion may be improved, the dispersibility may be improved, and a change in viscosity due to changes over time can be minimized.

The nonionic polymer may be in the form of a random coil.

The nonionic polymer may be in the form of a random coil including a main chain exhibiting hydrophobicity and a side chain exhibiting hydrophilicity.

The first dispersant includes the nonionic polymer in the form of a random coil including hydrophobicity and hydrophilicity, thereby stably binding to the carbon nanotubes and surrounding the surface of the carbon nanotubes. The cohesion between the carbon nanotubes may be reduced by the first dispersant, so that the carbon nanotubes may be smoothly dispersed.

The content of the first dispersant may be 0.01 wt% to 10.00 wt%, 0.01 wt% to 5.00 wt%, 0.01 wt% to 3.00 wt%, 0.01 wt% to 2.00 wt%, 0.05 wt% to 2.00 wt%, or 0.05 wt% to 1.50 wt% based on the total weight of the carbon nanotube dispersion. When the range is satisfied, the dispersion effect of carbon nanotubes may be improved, so that a carbon nanotube dispersion may have an appropriate initial viscosity.

The carbon nanotube dispersion according to the present invention includes a second dispersant that introduces charges to the surface of the carbon nanotubes.

The second dispersant may include an ionic polymer.

The second dispersant may include a cationic polymer and/or an anionic polymer.

Preferably, the second dispersant may include an anionic polymer.

The second dispersant may include one or more selected from the group consisting polyacrylic acid (salt), polyacrylic maleic acid (salt), sulfonic acid (salt), sulfonic acid ester, phosphoric acid (salt), phosphoric acid ester, acrylic-styrene copolymer, polyacrylic acid-styrene copolymer, polyacrylamide-acrylic acid copolymer, polyacrylic acid-sulfonic acid copolymer, and polyacrylic acid-maleic acid copolymer as an anionic polymer.

The weight average molecular weight of the anionic polymer may be 200 g/mol to 8,000 g/mol, 200 g/mol to 7,000 g/mol, 200 g/mol to 6,000 g/mol, 200 g/mol to 5,000 g/mol, 200 g/mol to 4,000 g/mol, 200 g/mol to 3,500 g/mol, 200 g/mol to 3,000 g/mol, 200 g/mol to 2,500 g/mol, or 200 g/mol to 2,000 g/mol. It is preferred that the weight average molecular weight of the anionic polymer is smaller than the weight average molecular weight of the nonionic polymer included in the first dispersant.

When the range is satisfied, strong interaction with the carbon nanotubes is possible, so that charges may be smoothly introduced to the surface of the carbon nanotubes. Accordingly, dispersibility may be improved, and a change in viscosity due to changes over time may be minimized.

The second dispersant may include an anionic polymer having an aromatic ring.

The second dispersant may include an anionic polymer having an aromatic ring and a sulfonic acid (salt) group. The anionic polymer having a sulfonic acid (salt) group may include benzene.

The anionic polymer may have at least two or more aromatic rings.

The second dispersant may include an anionic polymer having at least two or more aromatic rings and a sulfonic acid (salt) group.

The anionic polymer having a sulfonic acid (salt) group may include one or more selected from the group consisting of naphthylene, pyrene, anthracene, and phenanthrene.

The second dispersant may be combined with the carbon nanotubes to change the electrical properties of the surface of the carbon nanotubes. Charges may be introduced to the surface of the carbon nanotubes by the second dispersant. Negative charges may be introduced to the surface of the carbon nanotubes by the second dispersant. As charges are introduced to the surface of the carbon nanotubes by the second dispersant, charges formed on the surface of the carbon nanotubes may have electrostatic repulsion with a storage stabilizer described below.

In addition, the second dispersant may reduce the cohesion between the carbon nanotubes combined with the second dispersant due to the steric effect generated by the aromatic ring.

The content of the second dispersant may be 0.01 wt% to 10.00 wt%, 0.01 wt% to 5.00 wt%, 0.01 wt% to 3.00 wt%, 0.01 wt% to 2.00 wt%, 0.05 wt% to 2.00 wt%, or 0.05 wt% to 1.50 wt% based on the total weight of the carbon nanotube dispersion. When the range is satisfied, the dispersion effect of the carbon nanotubes may be further improved.

A content ratio of the first dispersant to the second dispersant may be 10:1 to 1:10, 5:1 to 1:5, 3:1 to 1:3, 2.5:1 to 1:3, 2:1 to 1:3, 1.5:1 to 1:3, or 1:1 to 1:3.

A ratio of the carbon nanotubes to the total content of the first dispersant and the second dispersant may be 1:1 to 1:2, 1:1 to 1:1.8, 1:1 to 1:1.7, or 1:1 to 1.2:1.7.

When the range is satisfied, the charge due to the second dispersant may be introduced in a balanced manner to the surface of the carbon nanotubes stabilized by the first dispersant, so that the dispersibility of the carbon nanotubes may be improved, and the performance of a secondary battery including the carbon nanotubes may be improved.

The carbon nanotube dispersion according to the present invention includes a storage stabilizer that has electrostatic repulsion against charges formed on the surface of the carbon nanotubes.

The phenomenon of the first and second dispersants not bonded to the carbon nanotubes being aggregated with each other may be suppressed by the storage stabilizer, and the phenomenon of the carbon nanotubes bonded with the first and second dispersants being aggregated with each other may be suppressed.

The repulsive force between the carbon nanotubes whose surfaces are modified with charges may be induced by the storage stabilizer. Electrostatic repulsion between carbon nanotubes which are dispersed by the first and second dispersants and whose surfaces are modified with negative charges may be induced by the storage stabilizer.

The storage stabilizer may include a phenolic compound having two or more aromatic rings. The storage stabilizer may include a phenolic monomolecular compound containing two or more aromatic rings and having negative charges.

The negative charges of the phenolic compound have the same polarity as the carbon nanotubes whose surfaces are modified with negative charges, so that electrostatic repulsion between the carbon nanotubes may be induced.

Accordingly, the carbon nanotube dispersion may have an appropriate initial viscosity range, and a viscosity increase over time may be minimized, so that long-term storage stability may be improved.

The phenolic compound may include one or more selected from the group consisting of tannic acid, luteolin, baicalin, taxifolin, myricetin, quercetin, rutin, catechin, epigallocatechin gallate, epicatechin gallate, butane, and piceatannol.

The weight average molecular weight of the phenolic compound may be 200 g/mol to 3,000 g/mol, 200 g/mol to 2,500 g/mol, 500 g/mol to 2,500 g/mol, or 500 g/mol to 2,000 g/mol.

When the range is satisfied, the phenomenon of the storage stabilizer being eluted during electrode manufacturing may be suppressed, and coatability and processability may be improved.

The content of the storage stabilizer may be 0.01 wt% to 0.1 wt%, 0.01 wt% to 0.08 wt%, 0.01 wt% to 0.07 wt%, or 0.02 wt% to 0.07 wt% based on the total weight of the carbon nanotube dispersion. The content of the storage stabilizer may be 1 part by weight to 10 parts by weight, 2 parts by weight to 10 parts by weight, 2 parts by weight to 9 parts by weight, or 2 parts by weight to 6 parts by weight based on 100 parts by weight of the carbon nanotubes.

When the range is satisfied, the electrostatic repulsion between the carbon nanotubes may be induced more efficiently, so an increase in viscosity over time may be minimized.

The total content of the first dispersant, the second dispersant, and the storage stabilizer may be 1 wt% to 2.5 wt%, 1 wt% to 2.2 wt%, 1 wt% to 2 wt%, or 1.5 wt% to 2 wt% based on the total weight of the carbon nanotube dispersion.

When the range is satisfied, smooth dispersion between high-content carbon nanotubes in the carbon nanotube dispersion may be achieved, so that the performance of a secondary battery including the high-content carbon nanotubes may be further improved.

The storage stabilizer may include silicate. The storage stabilizer may include layered silicate. When the storage stabilizer includes the layered silicate, the dispersibility of the carbon nanotubes may be further improved.

The carbon nanotube dispersion according to the present invention may include a solvent. The solvent may suppress aggregation between the carbon nanotubes or aggregation with an electrode active material by dispersing the carbon nanotubes in advance when the carbon nanotubes is mixed with an electrode active material, etc. to use as an electrode slurry composition.

The solvent may be an aqueous solvent. The aqueous solvent may be water.

The solvent may be an aqueous solvent, an organic solvent, or a mixture thereof.

Examples of the organic solvent may include amide polar organic solvents such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; esters such as ethyl acetate, γ-butyl lactone, and ε-propiolactone; and the like, and a mixture of one or more thereof may be used.

The initial viscosity of the carbon nanotube dispersion at room temperature may be 1,000 cP to 10,000 cP, 4,000 cP to 10,000 cP, 4,000 cP to 9,000 cP, 4,000 cP to 8,000 cP, or 5,000 cP to 8,000 cP. When the range is satisfied, the aggregation phenomenon of the carbon nanotubes may be suppressed, and the process of repeating the reintroduction and dispersion treatment of the carbon nanotubes may be minimized, so that the process efficiency may be improved.

The viscosity may be measured using a B-type viscometer, a rotating cylinder viscometer, and specifically may be measured using a DV2T LV viscometer (Brookfield).

A viscosity change rate in the carbon nanotube dispersion according to Equation 1 below may be 20 % or less, 18 % or less, 16 % or less, 14 % or less, 12 % or less, or 5 % or less. When the range is satisfied, an increase in viscosity of a carbon nanotubes-containing dispersion over time may be minimized, so that the long-term storage stability may be improved. Viscosity change rate (%) = (Viscosity after 7 days - Initial viscosity)/Initial viscosity × 100

The pH of the carbon nanotube dispersion at room temperature may be 3 to 10, 4 to 10, 4 to 9, 5 to 9, 5 to 8, or 6 to 8. When the range is satisfied, the occurrence of aggregation due to hydrogen bonding may be suppressed.

The absorbance of the carbon nanotube dispersion may be measured. The absorbance may be an indicator representing the degree of light absorption. The absorbance is proportional to the concentration of the substance, and the high absorbance of the carbon nanotube dispersion may mean that the carbon nanotubes capable of absorbing light are evenly dispersed at a high concentration. That is, the absorbance may be an indicator of the dispersibility of the carbon nanotubes included in the carbon nanotube dispersion.

The absorbance of the carbon nanotube dispersion may be 0.1 or more to 10 or less, 0.15 or more to 10 or less, 0.15 or more to 5 or less, or 0.2 or more to 5 or less. When the range is satisfied, aggregates included in the carbon nanotube dispersion may be minimized, high-purity carbon nanotubes may be included in the carbon nanotube dispersion and excellent dispersibility may be provided. The absorbance may be measured using a spectrophotometer at a wavelength range of 550 nm.

A method of preparing the carbon nanotube dispersion according to the present invention includes a step of mixing carbon nanotubes, a first dispersant including a nonionic polymer, a second dispersant including an ionic polymer, a storage stabilizer including a phenolic compound having two or more aromatic rings, and an aqueous solvent to prepare a mixture, a step of milling and disintegrating the mixture, and a step of dispersing the mixture.

The preparation method includes a step of mixing the above-described carbon nanotubes, the first dispersant, the second dispersant, the storage stabilizer, and an aqueous solvent to prepare a mixture.

The step of preparing the mixture may be performed at a temperature where the properties of the carbon nanotubes, the first dispersant, the second dispersant, and the storage stabilizer do not change.

The step of preparing the mixture may be performed under a temperature condition of at 3 °C to 50 °C, 5 °C to 50 °C, 5 °C to 45 °C, 5 °C to 40 °C, or 20 °C to 30 °C.

The preparation method includes a step of milling and disintegrating the mixture. By the step, the particle size distribution of carbon nanotubes included in the mixture may be arranged.

The step may be performed using a high-shear mixer. The step may be carried out at 1,000 rpm to 10,000 rpm, 2,000 rpm to 10,000 rpm, 5,000 rpm to 10,000 rpm, or 7,000 rpm to 10,000 rpm for 5 minutes to 60 minutes, 5 minutes to 50 minutes, 10 minutes to 50 minutes, or 10 minutes to 30 minutes using the mixer.

By the step, the mixture may be disintegrated so that the average particle diameter becomes less than 100 *µ*m, less than 95 *µ*m, less than 90 *µ*m, or less than 80 *µ*m. When the range is satisfied, the dispersibility of the carbon nanotubes may be further improved.

The preparation method includes a step of dispersing the mixture.

The step may be a step of redispersing the pre-dispersed mixture under a high-pressure condition by the disintegrating process.

In the step, a process of milling the mixture using a ball mill, a bead mill, a disc mill, a basket mill, or a high-pressure homogenizer may be repeatedly performed. Preferably, it may be performed using a high-pressure homogenizer.

The milling using a high-pressure homogenizer may be performed under a pressure condition of 200 bar to 3,000 bar, 500 bar to 3,000 bar, 1,000 bar to 3,000 bar, or 1,000 bar to 2,000 bar.

The step of dispersing the mixture may be performed 1 to 30 times, 2 to 30 times, 5 to 30 times, 5 to 20 times, or 5 to 10 times.

An electrode slurry composition according to the present invention includes an electrode active material, a binder, and a carbon nanotube dispersion, and the carbon nanotube dispersion includes carbon nanotubes, a first dispersant that surrounds the surface of the carbon nanotubes, a second dispersant that introduces charges to the surface of the carbon nanotubes, and a storage stabilizer having electrostatic repulsion against the charges.

The carbon nanotube dispersion may be the same as the above-described carbon nanotube dispersion.

The electrode active material may be a cathode active material.

The cathode active material is a compound capable of reversible intercalation and deintercalation of lithium, and specifically may include a lithium composite metal oxide containing lithium and one or more metals such as cobalt, manganese, nickel, or aluminum.

The lithium composite metal oxide is a lithium-manganese oxide (e.g., LiMnO₂, LiMn₂O₄, etc.), a lithium-cobalt oxide (e.g., LiCoO₂, etc.), a lithium-nickel oxide (e.g., LiNiO₂, etc.), a lithium-nickel-manganese oxide (e.g., LiNi_{1-Y}Mn_{Y}O₂ (where 0<Y<1), LiMn_{2-z}Ni_{z}O₄ (where 0 < Z < 2), etc.), a lithium-nickel-cobalt oxide (e.g., LiNi_{1-Y1}Co_{Y1}O₂ (where 0<Y1<1), etc.), a lithium-manganese-cobalt oxide (e.g., LiCo_{1-Y2}Mn_{Y2}O₂ (where 0<Y2<1), LiMn_{2-z1}Co_{z1}O₄ (where 0 < Z1 < 2), etc.), a lithium-nickel-manganese-cobalt oxide (e.g., Li(NiₚCo_{q}Mnᵣ₁)O₂ (where 0 < p < 1, 0 < q < 1, 0 < r1 < 1, p+q+r1=1) or Li(Niₚ₁Co_{q1}Mnᵣ₂)O₄ (where 0 < p1 < 2, 0 < q1 < 2, 0 < r2 < 2, p1+q1+r2=2), etc.), and lithium-nickel-cobalt-transition metal (M) oxide (e.g., Li(Niₚ₂Co_{q2}Mnᵣ₃M_{S2})O₂ (where M is selected from the group consisting of Al, Fe, V, Cr, Ti, Ta, Mg and Mo, p2, q2, r3 and s2 are atomic fractions of independent elements, 0 < p2 < 1, 0 < q2 < 1,0 < r3 < 1, 0 < s2 < 1, and p2+q2+r3+s2=1), etc.), etc., or one or more compounds thereof. Among these, the lithium composite metal oxide may be LiCoO₂, LiMnO₂, LiNiO₂, a lithium nickel manganese cobalt oxide (e.g., Li(Ni_{0.6}Mn_{0.2}Co_{0.2})O₂, Li(Ni_{0.5}Mn_{0.3}Co_{0.2})O₂, or Li(Ni_{0.8}Mn_{0.1}Co_{0.1})O₂, etc.), a lithium nickel cobalt aluminum oxide (e.g., Li(Ni_{0.8}Co_{0.15}Al_{0.05})O₂, etc.), etc. in terms of being able to improve the capacity characteristics and stability of a battery. Considering the remarkable improvement effect according to the control of the types and content ratio of constituent elements forming the lithium composite metal oxide, the lithium composite metal oxide may beLi(Ni_{0.6}Mn_{0.2}Co_{0.2})O₂, Li(Ni_{0.5}Mn_{0.3}Co_{0.2}O₂, Li(Ni_{0.7}Mn_{0.15}Co_{0.15})O₂, or Li(Ni_{0.8}Mn_{0.1}Co_{0.1})O₂, or a mixture of one or more thereof.

The electrode active material may be an anode active material.

The anode active material may be included in a content of 90 wt% to 99 wt%, 91 wt% to 99 wt%, 92 wt% to 99 wt%, 94 wt% to 99 wt%, or 95 wt% to 95 wt% based on the total weight of the electrode slurry composition. When the range is satisfied, the charge/discharge capacity of the secondary battery may be increased.

The anode active material may include a carbon-based material. The carbon-based material may include natural graphite particles and artificial graphite particles. The anode active material may include a silicon-based material.

The anode active material may include a silicon graphite composite. A weight ratio of silicon in the silicon graphite composite may be 1 wt% to 70 wt%, 5 wt% to 70 wt%, 5 wt% to 50 wt%, 5 wt% to 40 wt%, or 10 wt% to 40 wt%. When the range is satisfied, the deterioration of the lifespan characteristics of a secondary battery may be minimized, and the charge/discharge capacity may be significantly increased.

The silicon-based material may include one or more selected from the group consisting of metal silicon (Si), silicon oxide (SiOx, 0<x<2), silicon carbide (SiC) and a Si-Y alloy (where Y is an element selected from the group consisting of alkali metals, alkaline earth metals, Group 13 elements, Group 14 elements, transition metals, rare earth elements, and combinations thereof, and is not Si). The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

The silicon-based material may exhibit higher capacity characteristics than the carbon-based material. When the silicon-based material is included in the anode active material, the capacity characteristics may be improved. However, the silicon-based material had a problem in that the volume change during charge and discharge was large compared to the carbon-based material, and thus the cycle characteristics deteriorated. Accordingly, when the carbon nanotube according to the present invention is used as a conductive material, a high electron transfer path is improved compared to conventional conductive materials, so that the electrical conductivity may be improved. In addition, the dispersibility is improved, so that the structural stability is increased. Accordingly, when the anode active material includes the silicon-based material, not only the capacity characteristics may be improved, but also the cycle characteristics may be improved.

The binder may improve the adhesive force between the electrode active materials or between the electrode active material and the current collector. The binder may be a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, ethylene-propylene-diene monomer (EPDM), sulfonated EPDM, styrene butadiene rubber (SBR), fluorine rubber, or poly acrylic acid, or various types of binder polymers such as polymers in which hydrogen is substituted with Li, Na or Ca, or various copolymers may be used.

The binder may be included in a content of 0.1 wt% to 10 wt%, 0.1 wt% to 8 wt%, 0.1 wt% to 7 wt%, 0.1 wt% to 6 wt%, or 0.1 wt% to 5 wt% based on the total weight of the electrode slurry composition. When the range is satisfied, the effect as a binder may be excellent without a decrease in the capacity per volume due to a decrease in the relative content of the electrode active material.

The electrode slurry composition may include a solvent.

The solvent may mix each component in the electrode slurry composition and control the viscosity. The solvent may be an organic solvent such as N-methyl pyrrolidone (NMP), dimethyl formamide (DMF), acetone or dimethyl acetamide, or water, and these solvents may be used alone or in a combination of two or more thereof. The solvent may be used in an amount that can dissolve and disperse the electrode active material, the binder, and the carbon nanotube dispersion, considering the coating thickness and manufacturing yield of the electrode slurry composition.

The carbon nanotube dispersion may be used as a conductive agent. The carbon nanotube dispersion may be used as a conductive agent, thereby improving the initial discharge capacity and high-rate characteristics of a secondary battery.

The conductive agent may improve electrical conductivity. The conductive agent may further include graphite such as natural graphite or artificial graphite; carbon black such as acetylene black, Ketjen black, channel black, panes black, lamp black, or thermal black; a metal powder such as fluorocarbon, aluminum, or nickel powder; conductive whiskers such as zinc oxide or potassium titanate; a conductive metal oxide such as titanium oxide; or a conductive material such as a polyphenylene derivative.

A secondary battery according to the present invention includes an electrode, a separator, and an electrolyte, the electrode includes an electrode active material, a binder, and a conductive agent, the conductive agent is manufactured from a carbon nanotube dispersion, and the carbon nanotube dispersion includes carbon nanotubes, a first dispersant surrounding the surface of the carbon nanotubes, a second dispersant that introduces charges to the surface of the carbon nanotubes, and a storage stabilizer having electrostatic repulsion against the charges.

The carbon nanotube dispersion may be the same as the above-described carbon nanotube dispersion. The secondary battery includes carbon nanotubes, included in the carbon nanotube dispersion, as a conductive agent, so that electrical conductivity may be improved and, accordingly, the initial efficiency, lifespan characteristics, and high-rate discharge characteristics of a secondary battery may be improved.

The electrode may be a cathode. The cathode may include the above-described cathode active material, a binder, and a conductive agent. The cathode may be manufactured by applying a cathode slurry composition including a cathode active material on a cathode current collector, and then drying it to form a cathode active material layer. The cathode active material layer may be formed by applying a cathode slurry composition on the cathode current collector and then drying it, or applying a cathode slurry composition on a separate support and then peeling it off from the support, and then laminating the obtained film on the cathode current collector. After the formation of the cathode active material layer, a rolling process may be performed. The drying and rolling may be performed under appropriate conditions considering the properties of the electrode to be manufactured.

The cathode current collector is a metal with high conductivity to which the slurry of the cathode active material can easily adhere, and is not particularly limited so long as it has high conductivity without causing chemical changes in a secondary battery. For example, stainless steel, aluminum, nickel, titanium, calcined carbon, or aluminum or stainless steel surface-treated with carbon, nickel, titanium, silver, etc. may be used. In addition, the adhesive force of a cathode active material may be increased by forming fine irregularities on the surface of the cathode current collector. The cathode current collector may be used in various forms such as a film, a sheet, a foil, a net, a porous body, a foam, a nonwoven fabric, etc., and may have a thickness of 3 *µ*m to 500 *µ*m.

The electrode may be an anode. The anode may include the above-described anode active material, a binder, and a conductive agent. The anode may be manufactured by applying an anode slurry composition containing an anode active material on an anode current collector, and then drying to form an anode active material layer.

The anode current collector is not particularly limited as long as it is conductive and does not cause a chemical change in a secondary battery, and for example, copper, stainless steel, aluminum, nickel, titanium, calcined carbon, copper or stainless steel surface-treated with carbon, nickel, titanium, silver, etc., aluminum-cadmium alloy, etc. may be used. In addition, the binding force of the anode active material may be strengthened by forming fine irregularities on the surface thereof, and may be used in various forms such as a film, sheet, foil, net, porous body, foam, nonwoven fabric, etc.

The separator may be interposed between the anode and the cathode. The separator may be configured to prevent electrical short-circuiting between the cathode and the anode and to allow ion flow. The separator may include a porous polymer film or a porous nonwoven fabric. The porous polymer film may be composed of a single layer or multiple layers including a polyolefin polymer such as an ethylene polymer, a propylene polymer, an ethylene/butene copolymer, an ethylene/hexene copolymer, or an ethylene/methacrylate copolymer. The porous nonwoven fabric may include high-melting-point glass fibers and polyethylene terephthalate fibers. However, the present invention is not limited thereto, and depending on the embodiment, the separator may be a high-temperature-resistant separator (Ceramic Coated Separator; CCS) including ceramic.

The electrolyte may be a non-aqueous electrolyte. The electrolyte may include a lithium salt and an organic solvent. The organic solvent may include at least one of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

The cathode, the anode and the separator may be manufactured into an electrode assembly by a winding, lamination, folding, or zigzag stacking process. The electrode assembly may be provided together with the electrolyte and may be manufactured into a secondary battery. The secondary battery may be any one of a cylindrical, square, pouch, and coin type using a can, but is not limited thereto.

The secondary battery may be used in a high-power and large-capacity secondary battery that requires a long lifespan and excellent durability, or a module or pack including a plurality of the secondary batteries as unit batteries.

The plural secondary batteries may be manufactured into modules. The plural modules may be manufactured into a pack.

The pack may be used as a power source for medium- and large-sized devices that require high-temperature stability, long-cycle characteristics, high-rate characteristics, and the like. Examples of the medium- and large-sized devices include a power tool that is powered by an electric motor; electric vehicles including an electric vehicle (EV), a hybrid electric vehicle (HEV), and a plug-in hybrid electric vehicle (PHEV); electric two-wheeled vehicles including an electric bicycle (E-bike) and an electric scooter (E-scooter); an electric golf cart; an electric truck; an electric commercial vehicle, and a power storage system.

Hereinafter, the present invention is described in more detail based on Examples and Comparative Examples. However, the following Examples and Comparative Examples are only examples for explaining the present invention in more detail, and the present invention is not limited by the following Examples and Comparative Examples.

### Preparation examples

### Preparation Example 1

200 mg of single-walled carbon nanotubes were prepared by chemical vapor deposition (CVD) using a catalyst. Next, the single-walled carbon nanotubes were charged into a reactor.

Next, the reactor was purified at about 1,000 °C for 60 minutes under an argon atmosphere and vacuum conditions, and then cooled to room temperature, thereby preparing single-walled carbon nanotubes having a specific surface area of about 1,557 m²/g.

Using water as a solvent, a mixture in which the single-walled carbon nanotubes: the first dispersant (polyvinyl pyrrolidone, Mw 17,000 g/mol): the second dispersant (polynaphthalene sulfonate, Mw 5,000 g/mol): a storage stabilizer (tannic acid, Mw 1,700 g/mol) were mixed in a weight ratio of 26:19.5:19.5:1 was prepared.

Next, the mixture was processed for 20 minutes at 8,000 rpm using a mixer, and particles included in the mixture were disintegrated such that its average particle size was less than about 100 *µ*m.

Next, a carbon nanotube dispersion was prepared by processing 10 times under a pressure condition of 1,200 bar using a high-pressure homogenizer.

### Preparation Example 2

A carbon nanotube dispersion was prepared in the same manner as in Preparation Example 1 except that, as a storage stabilizer, tannic acid was used in a weight ratio of 0.6 instead of tannic acid of Preparation Example 1 used in a weight ratio of 1.

### Preparation Example 3

A carbon nanotube dispersion was prepared in the same manner as in Preparation Example 1 except that, as a storage stabilizer, tannic acid was used in a weight ratio of 0.4 instead of tannic acid of Preparation Example 1 used in a weight ratio of 1.

### Preparation Example 4

A carbon nanotube dispersion was prepared in the same manner as in Preparation Example 1 except that, as a storage stabilizer, tannic acid was used in a weight ratio of 1.2 instead of tannic acid of Preparation Example 1 used in a weight ratio of 1.

### Preparation Example 5

A carbon nanotube dispersion was prepared in the same manner as in Preparation Example 1 except that, as a storage stabilizer, tannic acid was used in a weight ratio of 1.4 instead of tannic acid of Preparation Example 1 used in a weight ratio of 1.

### Preparation Example 6

A carbon nanotube dispersion was prepared in the same manner as in Preparation Example 1 except that, as a storage stabilizer, epigallocatechin gallate was used instead of tannic acid of Preparation Example 1.

### Preparation Example 7

A carbon nanotube dispersion was prepared in the same manner as in Preparation Example 1 except that, as a storage stabilizer, epicatechin gallate was used instead of tannic acid of Preparation Example 1.

### Preparation Example 8

A carbon nanotube dispersion was prepared in the same manner as in Preparation Example 1 except that, as the second dispersant, polyacrylic acid with a weight average molecular weight of about 1,500 g/mol was used in a weight ratio of 19.5 instead of polynaphthalene sulfonate with a weight average molecular weight of about 5,000 g/mol of Preparation Example 1 used in a weight ratio of 19.5.

### Preparation Example 9

A carbon nanotube dispersion was prepared in the same manner as in Preparation Example 1 except that, as the first dispersant, polyvinyl pyrrolidone with a weight average molecular weight of about 30,000 g/mol was used instead of polyvinyl pyrrolidone with a weight average molecular weight of about 17,000 g/mol of Preparation Example 1.

### Preparation Example 10

A carbon nanotube dispersion was prepared in the same manner as in Preparation Example 1 except that single-walled carbon nanotubes (TUBALL, OCSiAl Company) having a specific surface area of 1,160 m²/g were used instead of the single-walled carbon nanotubes prepared in Preparation Example 1.

### Preparation Example 11

A carbon nanotube dispersion was prepared in the same manner as in Preparation Example 1 except that, as a storage stabilizer, tannic acid was used in a weight ratio of 0.16 instead of tannic acid of Preparation Example 1 used in a weight ratio of 1.

### Preparation Example 12

A carbon nanotube dispersion was prepared in the same manner as in Preparation Example 1 except that, as a storage stabilizer, tannic acid was used in a weight ratio of 3 instead of tannic acid of Preparation Example 1 used in a weight ratio of 1.

### Preparation Example 13

A carbon nanotube dispersion was prepared in the same manner as in Preparation Example 1 except that, as the first dispersant, polyvinyl pyrrolidone having a weight average molecular weight of about 30,000 g/mol was used in a weight ratio of 29.26 instead of polyvinyl pyrrolidone having a weight average molecular weight of about 17,000 g/mol of Preparation Example 1 used in a weight ratio of 19.5, and, as the second dispersant, polynaphthalene sulfonate was used in a weight ratio of 9.74 instead of polynaphthalene sulfonate of Preparation Example 1 used in a weight ratio of 19.5.

### Comparative Preparation Example 1

A carbon nanotube dispersion was prepared in the same manner as in Preparation Example 1 except that tannic acid, a storage stabilizer, of Preparation Example 1 was not used.

### Comparative Preparation Example 2

A carbon nanotube dispersion was prepared in the same manner as in Preparation Example 1 except that polyvinyl pyrrolidone, the first dispersant, and tannic acid, a storage stabilizer, of Preparation Example 1 were not used, and, as the second dispersant, polyacrylic acid having a weight average molecular weight of about 1,500 g/mol was used in a weight ratio of 19.5 instead of polynaphthalene sulfonate having a weight average molecular weight of about 5,000 g/mol of Preparation Example 1 used in a weight ratio of 19.5.

### Comparative Preparation Example 3

A carbon nanotube dispersion was prepared in the same manner as in Preparation Example 1 except that polyvinyl pyrrolidone, the first dispersant, and tannic acid, a storage stabilizer, of Preparation Example 1 were not used, and, as the second dispersant, polynaphthalene sulfonate was used in a weight ratio of 60 instead of polynaphthalene sulfonate of Preparation Example 1 used in a weight ratio of 19.5.

### Comparative Preparation Example 4

A carbon nanotube dispersion was prepared in the same manner as in Preparation Example 1 except that polynaphthalene sulfonate, the second dispersant, of Preparation Example 1 was not used.

### Comparative Preparation Example 5

A carbon nanotube dispersion was prepared in the same manner as in Preparation Example 1 except that, as the first dispersant, polyvinyl pyrrolidone was used in a weight ratio of 40 instead of polyvinyl pyrrolidone of Preparation Example 1 used in a weight ratio of 19.5, and polynaphthalene sulfonate, the second dispersant, of Preparation Example 1 was not used.

### Comparative Preparation Example 6

A carbon nanotube dispersion was prepared in the same manner as in Preparation Example 1 except that polyvinyl pyrrolidone, the first dispersant, of Preparation Example 1 was not used.

**[Table 1]**

| Classificati on | Whethe r storage stabiliz er include d | Storage stabiliz er content^{1 )} | Content of storage stabilizer relative to carbon nanotubes ²⁾ | Whether first dispersa nt included | Whether second dispersa nt included | First dispersa nt content: second dispersa nt content | Total content of first dispersan t + second dispersan t + storage stabilizer ³⁾ |
|---|---|---|---|---|---|---|---|
| Unit | - | wt% | Parts by weight | - | | | wt% |
| Preparation Example 1 | ○ | 0.05 | 3.85 | ○ | ○ | 1:1 | 2.00 |
| Preparation Example 2 | ○ | 0.03 | 2.31 | ○ | ○ | 1:1 | 1.98 |
| Preparation Example 3 | ○ | 0.02 | 1.54 | ○ | ○ | 1:1 | 1.97 |
| Preparation Example 4 | ○ | 0.06 | 4.62 | ○ | ○ | 1:1 | 2.01 |
| Preparation Example 5 | ○ | 0.07 | 5.38 | ○ | ○ | 1:1 | 2.02 |
| Preparation Example 6 | ○ | 0.05 | 3.85 | ○ | ○ | 1:1 | 2.00 |
| Preparation Example 7 | ○ | 0.05 | 3.85 | ○ | ○ | 1:1 | 2.00 |
| Preparation Example 8 | ○ | 0.05 | 3.85 | ○ | ○ | 1:1 | 2.00 |
| Preparation Example 9 | ○ | 0.05 | 3.85 | ○ | ○ | 1:1 | 2.00 |
| Preparation Example 10 | ○ | 0.05 | 3.85 | ○ | ○ | 1:1 | 2.00 |
| Preparation Example 11 | ○ | 0.008 | 0.62 | ○ | ○ | 1:1 | 1.96 |
| Preparation Example 12 | ○ | 0.15 | 11.54 | ○ | ○ | 1:1 | 2.10 |
| Preparation Example 13 | ○ | 0.05 | 3.85 | ○ | ○ | 3:1 | 2.00 |
| Comparativ e Preparation Example 1 | × | - | - | ○ | ○ | 1:1 | 1.95 |
| Comparativ e Preparation Example 2 | × | - | - | × | ○ | - | 0.975 |
| Comparativ e Preparation Example 3 | × | - | - | × | ○ | - | 3.00 |
| Comparativ e Preparation Example 4 | ○ | 0.05 | 3.85 | ○ | × | - | 1.025 |
| Comparativ e Preparation Example 5 | ○ | 0.05 | 3.85 | ○ | × | - | 2.00 |
| Comparativ e Preparation Example 6 | ○ | 0.05 | 3.85 | × | ○ | - | 1.025 |
| 1) Storage stabilizer content: Based on total weight of carbon nanotube dispersion | | | | | | | |
| 2) Content of storage stabilizer relative to carbon nanotubes: Based on 100 parts by weight of carbon nanotubes | | | | | | | |
| 3) Total content of first dispersant + second dispersant + storage stabilizer: Based on total weight of carbon nanotube dispersion | | | | | | | |

### Examples

### Example 1

### <Anode fabrication>

An anode active material slurry including a silicon graphite composite, the carbon nanotube dispersion of Preparation Example 1, a carboxymethyl cellulose (CMC) thickener and a styrene butadiene rubber (SBR) binder in a weight ratio of 96.5:0.1:1.2:2.2 (a silicon graphite composite: the carbon nanotube dispersion of Preparation Example 1:a carboxymethyl cellulose (CMC) thickener: a styrene butadiene rubber (SBR) binder) was coated to a thickness of about 30 ,um on a Cu foil current collector with a thickness of about 10 *µ*m, and then dried at 100 °C for about 12 hours to fabricate an anode.

### <Secondary battery (coin half-cell) fabrication>

A metal lithium foil of about 0.3 mm was used as a cathode, and a polyethylene separator was interposed between the cathode and the anode. Next, EC and EMC were mixed in a ratio of 3:7 (EC:EMC), and 1 M LiPF₆, a non-aqueous electrolyte, was injected thereinto, thereby fabricating a coin half-cell.

### Examples 2 to 13 and Comparative Examples 1 to 6

A coin half-cell was fabricated in the same manner as in Example 1 except that each carbon nanotube dispersion shown in Table 2 below was used instead of the carbon nanotube dispersion of Preparation Example 1.

### Experimental examples

### Experimental Example 1 - Initial viscosity

For the carbon nanotube dispersion of each of Preparation Examples 1 to 13 and Comparative Preparation Examples 1 to 6, the initial viscosity at room temperature was measured using a DV2T LV viscometer (Brookfield). Results are shown in Table 2 below.

### Experimental Example 2 - Viscosity change rate

For the carbon nanotube dispersion of each of Preparation Examples 1 to 13 and Comparative Preparation Examples 1 to 6, the viscosity after 7 days was measured under the same conditions as in Experimental Example 1, and a viscosity change rate was calculated according to Equation 1 below. Results are shown in Table 2 below: Viscosity change rate (%) = (Viscosity after 7 days - Initial viscosity)/Initial viscosity × 100

### Experimental Example 3 - Dispersibility

For the carbon nanotube dispersion of each of Preparation Examples 1 to 13 and Comparative Preparation Examples 1 to 6, a zeta potential was measured. An evaluation was made according to the following criteria, and results are shown in Table 2 below:
- o: Absolute value exceeds 30 mV.
- △: Absolute value is 10 mV to 30 mV.
- ×: Absolute value is less than 10mV.

### Experimental Example 4 - Dispersion stability

The carbon nanotube dispersion of each of Preparation Examples 1 to 13 and Comparative Preparation Examples 1 to 6 was placed in a glass bottle, and then the presence or absence of aggregation was measured for 120 days. An evaluation was made according to the following criteria, and results are shown in Table 2 below.
- o: Aggregation occurred after 2 weeks
- △: Aggregation occurred within 1 to 2 weeks
- ×: Aggregation occurred within 1 week

### Experimental Example 5 - Initial discharge capacity evaluation of coin half-cells

For the coin half-cell of each of Examples 1 to 13 and Comparative Examples 1 to 6, charging was started in a constant current (CC) mode to 0.01 V with a current of 0.1 C at room temperature, and then switched to a constant voltage (CV) to be cut off at 0.01 C, and discharging was performed in a constant current (CC) mode to 1.5 V with a current of 0.1 C.

After performing charging and discharging up to the second cycle under the above charge and discharge conditions, the discharge capacity in the second cycle was measured, and results are shown in Table 2 below.

### Experimental Example 6 - High-rate feature evaluation

For the coin half-cell of each of Examples 1 to 13 and Comparative Examples 1 to 6, charging was performed under constant current (0.2C) and constant voltage (0.01V, 0.01C cutoff) conditions at room temperature, and then it was rested for 10 minutes, and discharged under constant current (3.0C) conditions until it reached 1.5 V.

The discharge capacity and capacity retention rate after performing the charging and discharging were measured, and results are shown in Table 2 below.

**[Table 2]**

| Classifica tion | Dispersio n | Initial viscos ity | Viscos ity change rate | Dispersib ility | Dispers ion stability | Initial discha rge capacit y | Discha rge capacit y | Capac ity retenti on rate |
|---|---|---|---|---|---|---|---|---|
| Unit | - | cP | % | - | | mAh/g | | % |
| Example 1 | Preparati on Example 1 | 6,063 | 0.45 | ○ | ○ | 548 | 511 | 93.2 |
| Example 2 | Preparati on Example 2 | 5,750 | 0.70 | ○ | ○ | 547 | 508 | 92.9 |
| Example 3 | Preparati on Example 3 | 5,620 | 0.70 | ○ | ○ | 548 | 508 | 92.7 |
| Example 4 | Preparation Example 4 | 6,005 | 0.44 | ○ | ○ | 550 | 509 | 92.5 |
| Example 5 | Preparati on Example 5 | 6,020 | 0.43 | ○ | ○ | 554 | 515 | 93.0 |
| Example 6 | Preparati on Example 6 | 5,833 | 3.27 | ○ | ○ | 551 | 510 | 92.6 |
| Example 7 | Preparati on Example 7 | 6,035 | 4.35 | ○ | ○ | 549 | 507 | 92.3 |
| Example 8 | Preparati on Example 8 | 6,550 | 1.52 | ○ | ○ | 547 | 489 | 89.4 |
| Example 9 | Preparati on Example 9 | 6,210 | 1.32 | ○ | ○ | 544 | 485 | 89.2 |
| Example 10 | Preparati on Example 10 | 6,060 | 0.48 | ○ | ○ | 538 | 479 | 89.0 |
| Example 11 | Preparati on Example 11 | 6,520 | 8.45 | ○ | ○ | 541 | 504 | 93.2 |
| Example 12 | Preparati on Example 12 | 4,820 | 1.32 | ○ | ○ | 540 | 477 | 88.4 |
| Example 13 | Preparati on Example 13 | 9,500 | 5.52 | ○ | ○ | 540 | 476 | 88.2 |
| Comparat ive Example 1 | Compara tive Preparation Example 1 | 908 | 82.5 | × | × | 514 | 400 | 77.9 |
| Comparat ive Example 2 | Compara tive Preparati on Example 2 | -¹⁾ | - | × | × | 511 | 338 | 66.1 |
| Comparat ive Example 3 | Compara tive Preparati on Example 3 | -²⁾ | - | × | × | 510 | 301 | 59.0 |
| Comparat ive Example 4 | Compara tive Preparati on Example 4 | 1,815 | 39.1 | Δ | × | 522 | 425 | 81.5 |
| Comparat ive Example 5 | Compara tive Preparati on Example 5 | 3,505 | 45.5 | Δ | × | 523 | 423 | 80.8 |
| Comparat ive Example 6 | Compara tive Preparati on Example 6 | 2.186 | 56.5 | Δ | Δ | 523 | 427 | 81.7 |
| 1, 2) -: Aggregation occurred, making viscosity measurement impossible. | | | | | | | | |

As shown in Tables 1 and 2, it was confirmed that the carbon nanotube dispersions according to Preparation Examples 1 to 13 including the first and second dispersants and a storage stabilizer had excellent dispersibility and long-term storage stability compared to Comparative Preparation Examples 1 to 6.

In addition, it was confirmed that the secondary batteries of Examples 1 to 13 including the carbon nanotube dispersions according to Preparation Examples 1 to 13 had excellent initial discharge capacity and high-rate features, compared to the secondary batteries of Comparative Examples 1 to 6 including the carbon nanotube dispersions according to Comparative Preparation Examples 1 to 6.

## Claims

1. A carbon nanotube dispersion, comprising:
carbon nanotubes;
a first dispersant surrounding a surface of the carbon nanotubes;
a second dispersant for introducing charges to the surface of the carbon nanotubes; and
a storage stabilizer having electrostatic repulsion against the charges.

2. The carbon nanotube dispersion according to claim 1, wherein the storage stabilizer comprises a phenolic compound having two or more aromatic rings.

3. The carbon nanotube dispersion according to claim 2, wherein the phenolic compound has a weight average molecular weight of 200 g/mol to 3,000 g/mol.

4. The carbon nanotube dispersion according to claim 1, wherein a content of the storage stabilizer based on a total weight of the carbon nanotube dispersion is 0.01 wt% to 0.1 wt%.

5. The carbon nanotube dispersion according to claim 1, wherein a content of the storage stabilizer based on 100 parts by weight of the carbon nanotubes is 1 part by weight to 10 parts by weight.

6. The carbon nanotube dispersion according to claim 1, wherein the carbon nanotubes are single-walled carbon nanotubes.

7. The carbon nanotube dispersion according to claim 1, wherein the first dispersant comprises a nonionic polymer.

8. The carbon nanotube dispersion according to claim 1, wherein the second dispersant comprises an ionic polymer.

9. The carbon nanotube dispersion according to claim 1, wherein an initial viscosity of the carbon nanotube dispersion at room temperature is 1,000 cP to 10,000 cP.

10. A method of preparing a carbon nanotube dispersion, the method comprising:
mixing carbon nanotubes, a first dispersant comprising a nonionic polymer, a second dispersant comprising an ionic polymer, a storage stabilizer comprising a phenolic compound having two or more aromatic rings, and an aqueous solvent to prepare a mixture;
milling and disintegrating the mixture; and
dispersing the mixture.

11. The method according to claim 10, wherein the mixture is disintegrated so that an average particle diameter of the mixture is less than 100 *µ*m.

12. An electrode slurry composition, comprising:
an electrode active material;
a binder; and
a carbon nanotube dispersion,
wherein the carbon nanotube dispersion comprises carbon nanotubes, a first dispersant surrounding a surface of the carbon nanotubes, a second dispersant for introducing charges to the surface of the carbon nanotubes, and a storage stabilizer having electrostatic repulsion against the charges.

13. A secondary battery, comprising:
an electrode;
a separator; and
an electrolyte,
wherein the electrode comprises an electrode active material, a binder, and a conductive agent,
wherein the conductive agent is manufactured from a carbon nanotube dispersion,
wherein the carbon nanotube dispersion comprises carbon nanotubes, a first dispersant surrounding a surface of the carbon nanotubes, a second dispersant for introducing charges to the surface of the carbon nanotubes, and a storage stabilizer having electrostatic repulsion against the charges.
